# EUROPÄISCHE PATENTANMELDUNG

(11) **EP 2 587 105 A1**
(43) Veröffentlichungstag der Anmeldung: **01.05.2013**
(21) Anmeldenummer: 11187003.6
(22) Anmeldetag: 27.10.2011
(51) Int. Cl.: F16L 3/24

(54) **Rohrschelle**

(71) Anmelder: Zurecon AG, 8003 Zürich (CH)
(72) Erfinder: Pfluger, Gerd, 4625 Oberbuchsiten (CH)
(74) Vertreter: Rutz & Partner

(57) **Zusammenfassung**

Die Rohrschelle (1), die der Installation von Rohren (2) unterschiedlichen Durchmessers dient, umfasst ein Montageelement (10), mittels dessen das Rohr (2) gehalten wird und das mit einem Profilelement (5) verbindbar ist. Erfindungsgemäss weist das Montageelement (10), das flächig und zumindest annähernd in der Form eines U-Profils ausgestaltet ist, zwei zueinander zumindest annähernd parallele Schenkel (101, 102) auf, die je mit einem Fusselement (12) versehen sind, welche in das Profilelement (5) eingehängt werden können. Weiterhin ist wenigstens eine Spannvorrichtung (6) vorgesehen, mittels der das Rohr (2) gegen das Profilelement (5) anpressbar ist.

## Beschreibung

Die Erfindung betrifft eine der Installation von Leitungen, insbesondere Rohren dienende Rohrschelle nach dem Oberbegriff des Patentanspruchs 1.

Für die Zuführung und Verteilung von Medien, wie Elektrizität, Gas, Wasser, Fernwärme, in Bauten werden Installations- und Montagevorrichtungen verwendet, wie sie in [1], Produktkatalog der LANZ OENSINGEN AG, April 2003 gezeigt und beschrieben sind. Beispielsweise werden von Stützen und Auslegern gehaltene Kabelkanäle oder Gitterbahnen verwendet, in welche die zu installierenden Rohre, Leitungen und Kabel eingelegt werden.

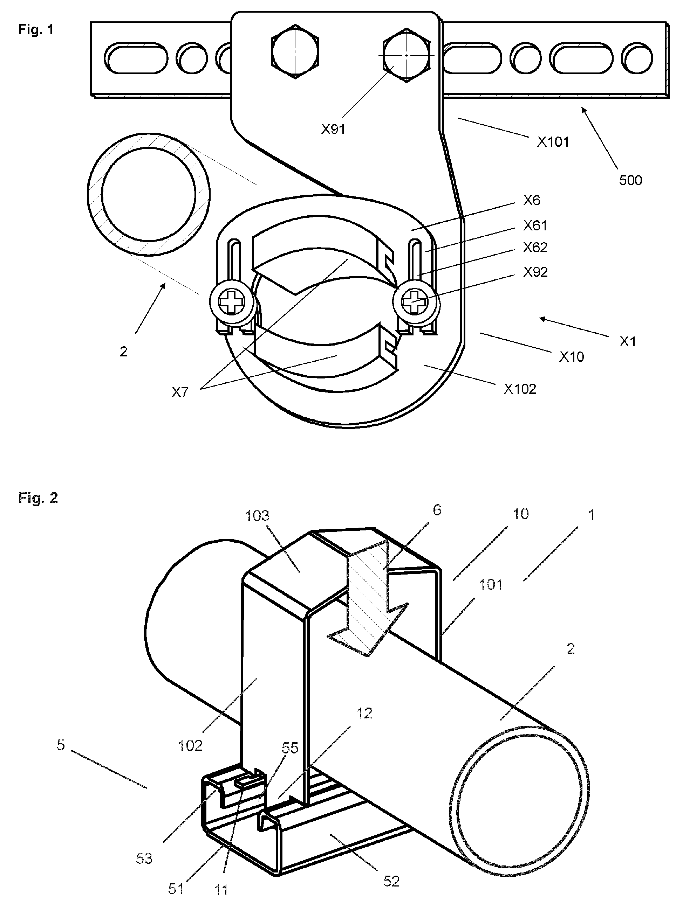

Zur Installation einzelner Rohre und Leitungen werden Rohrschellen verwendet, die oft an Profilelementen, wie Stützen oder Auslegern, montiert werden. Eine derartige Rohrschelle ist in [1], Seiten 60-65 sowie nachstehend in Figur 1 gezeigt. Diese bekannte Rohrschelle X1, die an einer mit Montageöffnungen versehenen Profilschiene 500 montiert ist, weist ein Montageelement X10 auf, an dem ein der Aufnahme eines Rohres 2 dienendes und mit einem Abschlussbügel X6 abschliessbares Aufnahmeteil X102 und ein mit Montageöffnungen versehenes Montageteil X101 vorgesehen ist. Durch die Montageöffnungen des Montageteils X101 und durch Öffnungen in der Profilschiene 500 hindurch sind Montageschrauben X91 führbar, mittels derer die Rohrschelle X1 fest mit der Profilschiene 500 verbindbar ist. Das Aufnahmeteil X102, das eine annähernd halbkreisförmige Ausnehmung aufweist, ist beidseits der Ausnehmung mit Gewindebohrungen versehen, in die der Befestigung des Abschlussbügels X6 dienende Verbindungsschrauben X92 eingedreht sind. Der Abschlussbügel X6 weist gabelförmige Endstücke X61 mit nach aussen geöffneten Schlitzen X62 auf, die je der Aufnahme des Schafts einer Verbindungsschraube X92 dienen. Nach dem Lösen der Verbindungsschrauben X92 kann der Abschlussbügel X6 soweit gegen das Aufnahmeteil X102 hin verschoben werden, bis das installierte Rohr 2 fest umschlossen ist. Zum elastischen Halten des Rohrs 2 sind das Aufnahmeteil X102 und der Abschlussbügel X6 an den einander zugewandten Seiten mit elastischen Stützelementen X7 versehen, die mittels verschiedener Hilfselemente montiert werden.

Diese bekannte Rohrschelle X1 weist verschiedene Nachteile auf. Die Rohrschelle X1 erfordert einerseits wenigstens eine Schraubverbindung zur Montage an der Profilschiene 500. Andererseits müssen die der Befestigung des Bügels X6 dienenden Verbindungsschrauben X92 fest angezogen werden, damit sich das installierte Rohr 2 nicht selbsttätig lösen kann. Sofern die Rohrschelle X1 nicht hängend, wie in Figur 1, sondern stehend montiert wird, so wird ein in das Aufnahmeteil X102 eingelegtes Rohr 2 nicht gehalten, sondern muss mittels des Abschlussbügels X6 und der Verbindungsschrauben X92 fixiert werden. Sollten sich bei stehender Montage der Rohrschelle X1 die Verbindungsschrauben X92 zum Beispiel aufgrund von Vibrationen lösen, so ist das Rohr 2 von der Rohrschelle X1 nicht mehr gehalten.

Besonders nachteilig ist auch die Tatsache, dass der Abschlussbügel X6 kaum optimal installierbar ist. Der Abschlussbügel X6 muss mit einer Hand angedrückt werden, während die Verbindungsschrauben X92 mit der anderen Hand festgezogen werden. Sofern das Rohr 2 nicht spielfrei gehalten ist, muss der Abschlussbügel X6 wieder gelöst und neu montiert werden, was mit entsprechendem Aufwand verbunden ist. Sofern das Rohr 2 hingegen nicht optimal montiert ist, werden Vibrationen und entsprechende Geräusche nur ungenügend gedämpft. Sofern nach längerer Betriebsdauer, zum Beispiel aufgrund einer Relaxation elastischer Stützelemente, das Rohr 2 nicht mehr spielfrei gehalten ist und Geräusche verursacht, so sind entsprechende Wartungsarbeiten mit relativ hohem Aufwand verbunden.

Aufgrund der vorgegebenen Dimensionen des Montageelements und des Abschlussbügels können zudem nur Rohre zuverlässig montiert werden, deren Durchmesser in einem relativ schmalen Bereich liegen. Für stärker voneinander abweichende Durchmesser der zu installierenden Leitungen und Rohre müssen daher verschiedene Grössen von Rohrschellen zur Verfügung gestellt werden.

Der vorliegenden Erfindung liegt daher die Aufgabe zugrunde, eine verbesserte Rohrschelle zu schaffen, mittels der Rohre, einschliesslich Leitungen aller Art, vorteilhaft installiert werden können.

Insbesondere ist eine einfach aufgebaute und kostengünstig herstellbare, ungeschweisste Rohrschelle zu schaffen, die für einen relativ breiten Bereich des Durchmessers von Rohren und Leitungen einsetzbar ist und die einfach montiert und mit minimalem Aufwand gewartet werden kann.

Dabei soll die durch den Medientransport in den Leitungen verursachte Geräuschentwicklung, unabhängig vom jeweiligen Durchmesser der installierten Leitung, minimal bleiben.

Sofern nach längerer Betriebsdauer Nachjustierungen erforderlich sein sollten, so sollen diese an den erfindungsgemässen Rohrschellen mit geringem Aufwand durchführbar sein.

Diese Aufgabe wird mit einer Rohrschelle gelöst, welche die in Anspruch 1 angegebenen Merkmale aufweist. Vorteilhafte Ausgestaltungen der Erfindung sind in weiteren Ansprüchen angegeben.

Die Rohrschelle, die der Installation von Rohren unterschiedlichen Durchmessers, einschliesslich Leitungen jeglicher Art, dient, umfasst ein mit einem Profilelement verbindbares Montageelement, mittels dessen das Rohr gehalten wird.

Erfindungsgemäss weist das Montageelement, das flächig und zumindest annähernd in der Form eines U-Profils ausgestaltet ist, zwei zueinander vorzugsweise parallele Schenkel auf, die je mit einem Fusselement versehen sind, welche in das Profilelement eingehängt werden können. Weiterhin ist wenigstens eine Spannvorrichtung vorgesehen, mittels der das Rohr gegen das Profilelement anpressbar ist.

Die erfindungsgemässe Rohrschelle kann in einfacher Weise montiert werden, indem das zu installierende Rohr in das Montageelement eingelegt und dieses in der Folge in das Profilelement eingehängt wird. Das Rohr kann daher mit einem Handgriff vorinstalliert werden, so dass es vom Profilelement, zum Beispiel einem C-Profilstück, sicher gehalten wird.

Nach dem Einhängen des Montageelements ist das Rohr zwischen diesem und dem Profilelement sicher gehalten und zwar unabhängig davon, ob die Rohrschelle hängend oder stehend montiert wird.

Die Fusselemente, die in das Profilelement eingehängt werden, sind in die gleiche Richtung oder in einander entgegengesetzte Richtungen ausgerichtet. In einer vorzugsweisen Ausgestaltung ist am Montageelement für jedes Fusselement ein Arretierelement vorgesehen, welches nach dem Einhängen des Fusselements in das Profilelement in den Bereich des Weges hinein bringbar ist, entlang dem das zugehörige Fusselement in das Profilelement eingeführt wurde. Nach der Betätigung des Arretierelements, welches vorzugsweise am Montageelement angeformt ist, ist der Rückweg somit versperrt, weshalb die Fusselemente mit dem Profilelement fest gekoppelt sind. Die Kopplung des Montageelements mit dem Profilelement erfolgt somit in einfacher Weise mit wenigen Handgriffen, ohne dass Montageschrauben erforderlich sind. Alternativ kann ein Arretierschieber oder ein Arretierhebel vorteilhaft vorgesehen werden.

Das mit den Fusselementen und vorzugsweise den Arretierelementen versehene Montageelement kann in einfacher Weise und mit minimalem Materialaufwand aus einem Stahlband gefertigt werden. Die einstückig mit dem Montageelement verbundenen Arretierelemente sind vorzugsweise nach aussen gebogen, so dass sie nach dem Einhängen der Fusselemente in die zu verschliessende Öffnung im Profilelement gedrückt werden können. Zur Befestigung der drehbaren oder verschiebbaren Arretierelemente wird das Montageelement vorzugsweise mit einem Verbindungselement, zum Beispiel einer als Drehachse dienenden Niete, oder mit Flanschelementen versehen, welche vorzugsweise aus dem Montageelement ausgeschnitten sind.

Vorzugsweise werden Profilelemente verwendet, die einen C-förmigen Querschnitt mit gegeneinander gerichteten Endstücken aufweisen, die einen Kanal begrenzen, durch den hindurch die Fusselemente in das Profilteil einführbar und mittels der Arretierelemente darin arretierbar sind.

Zur schonenden Lagerung des installierten Rohres ist vorzugsweise ein elastisches Lagerelement vorgesehen, welches ein in den Kanal des Profilelements einführbares Ankerelement und einen die Endstücke des Kanals überlappenden Aufnahmekörper aufweist. Der Aufnahmekörper weist vorzugsweise zwei geneigte Flächen auf, die seitlich am Rohr anliegen und dieses stützen. Auf diese Weise können Rohre mit unterschiedlichen Durchmessern spielfrei und elastisch gehalten werden.

Die Spannvorrichtung kann unterschiedlich ausgestaltet werden. In einer ersten vorzugsweisen Ausgestaltung umfasst die Spannvorrichtung ein elastisches Element, welches zwischen das zu installieren der Rohr und das Montageelement eingesetzt wird. Zusammen mit dem Montageelement wird das elastische Element beim Verbinden des Montageelements mit dem Profilelement gegen das Rohr gedrückt, so dass das elastische Element komprimiert wird. Nach dem Einhängen des Montageelements wird das Rohr vom elastischen Element gegen das Profilelement gedrückt und in dieser Position fixiert. Das elastische Element kann ein Kunststoffelement, zum Beispiel Schaumstoff, oder eine Federelement aus Kunststoff oder Metall sein.

Bei dieser ersten Ausgestaltung ergibt sich der Nachteil, dass der Druck, mit dem das Rohr gegen das Profilelement angedrückt wird, vom Durchmesser des Rohres abhängig ist. In besonders bevorzugten Ausgestaltungen werden daher Spannvorrichtungen verwendet, bei denen ein erwünschter Anpressdruck resultiert bzw. aufrechterhalten werden kann.

In einer zweiten bevorzugten Ausgestaltung wird eine Spannvorrichtung vorgesehen, die einen mittels Befestigungsschrauben mit den Schenkeln des Montageelements verbundenen Bügel aufweist. Der Bügel kann somit gegen das installierte Rohr gefahren und mittels der Befestigungsschrauben fixiert werden. Beispielsweise weisen die Schenkel je eine dazu parallel verlaufende Schlitzöffnung auf, durch die hindurch Befestigungsschrauben je zu einer Gewindebohrung in Endstücken des Bügels geführt sind, die vorzugsweise parallel zu den Schenkeln ausgerichtet sind.

In einer dritten bevorzugten Ausgestaltung weist die Spannvorrichtung einen mittels wenigstens einer Rastvorrichtung mit den Schenkeln des Montageelements verbundenen Bügel auf. Bei dieser Ausgestaltung kann der Bügel manuell gegen das installierte Rohr gefahren werden, wobei die Rastvorrichtung den Bügel automatisch mit den Schenkeln verbindet. Dazu weisen die Schenkel des Montageelements je wenigstens eine Rasterung mit mehreren Rastpositionen auf, in die ein vorzugsweise elastisch gelagertes Rastelement eingreifen kann, das am zugehörigen Endstück des Bügels vorgesehen ist. Vorzugsweise ist jedes Endstück mit einer Durchtrittsöffnung versehen, durch die der zugeordnete Schenkel des Montageelements hindurch geführt ist. Der Bügel ist mit den Schenkeln daher verschiebbar verbunden und kann mittels der Rastvorrichtungen an einer Position fixiert werden, an der das spielfreie Halten des installierten Rohres gewährleistet ist.

In einer vierten Ausgestaltung umfasst die Spannvorrichtung einen dem Ziehen eines Spannbandes dienenden Schneckenantrieb, mittels dessen das Spannband so weit gespannt werden kann, bis das spielfreie Halten des installierten Rohres erreicht ist. Mittels des Schneckenantriebs kann ein optimaler, gegebenenfalls hoher Anpressdruck eingestellt werden, wonach das Spannband durch den Schneckenantrieb in der gewünschten Position fixiert ist.

In einer vorzugsweisen Ausgestaltung ist das mit Traktionsöffnungen versehene Spannband innerhalb des Querschnitts des Montageelements am ersten Schenkel befestigt. Beispielsweise ist das Endstück des Spannbandes im Bereich des Fusselements mit dem ersten Schenkel verschweisst oder mittels Flanschelementen gehalten, die aus dem ersten Schenkel ausgeschnitten sind. Der Schneckenantrieb ist am zweiten Schenkel vorzugsweise derart befestigt, dass eine Schneckenschraube, die in einem Schneckengehäuse gelagert ist, in die Traktionsöffnungen des Spannbandes eingreift.

In einer weiteren vorzugsweisen Ausgestaltung ist das Spannband in das Montageelement integriert und bildet einen Teil davon.

Nachfolgend wird die Erfindung anhand von Zeichnungen näher erläutert. Dabei zeigt:
- Fig. 1: die eingangs beschriebene aus [1] bekannte Rohrschelle X1;
- Fig. 2: eine erfindungsgemässe Rohrschelle 1 mit einem flächig und zumindest annähernd in der Form eines U-Profils ausgestalteten Montageelement 10, das zwei Schenkel 101, 102 aufweist, die je mit einem Fusselement 12 versehen sind, welche in ein Profilelement 5 eingehängt sind, und mit einer symbolisch gezeigten Spannvorrichtung 6, mittels der das Rohr 2 fixiert werden kann;
- Fig. 3: die Einzelteile der Rohrschelle 1A von Figur 2 in einer ersten vorzugsweisen Ausgestaltung mit wenigstens einem elastischen Element 61 als Spannvorrichtung;
- Fig. 4: die installierte Rohrschelle 1A von Figur 3 mit den in eine Öffnung 55 des Profilelements 5 eingehängten Fusselementen 12;
- Fig. 4a: das in das Profilelement 5 eingehängte Fusselement 12 des zweiten Schenkels 102 von Figur 4 mit einem nach aussen gebogenen Arretierelement 11;
- Fig. 4b: das in das Profilelement 5 eingehängte Fusselement 12 des zweiten Schenkels 102 von Figur 4 mit dem in die Öffnung 55 des Profilelements 5 eingedrehten Arretierelement 11;
- Fig. 5a: die Rohrschelle 1B in einer zweiten vorzugsweisen Ausgestaltung mit einer Spannvorrichtung 62, die einen mittels Verbindungsschrauben 622 mit den Schenkeln 101, 102 des Montageelements 10 verbundenen Bügel 621 aufweist;
- Fig. 5b: die Rohrschelle 1B von Figur 5a nach der Installation eines Rohres 2;
- Fig. 6a: die Rohrschelle 1C in einer dritten vorzugsweisen Ausgestaltung mit einer Spannvorrichtung 63, die einen beidseits mittels je einer Rastvorrichtung 632 mit den Schenkeln 101, 102 des Montageelements 10 verbundenen Bügel 631 aufweist;
- Fig. 6b: die Spannvorrichtung 63 der Rohrschelle 1C von Figur 6a in einer Detailansicht;
- Fig. 7a-f: die Rohrschelle 1D in einer vierten vorzugsweisen Ausgestaltung mit einem ein- oder zweiteiligen mit Montageelement 10 und einer Spannvorrichtung 64, die einen dem Ziehen eines Spannbandes (641) dienenden Schneckenantrieb 642;
- Fig. 8a-e: die Rohrschelle 1E in einer fünften vorzugsweisen Ausgestaltung mit einer Spannvorrichtung 64, die einen Schneckenantrieb (642) und ein in das Montageelement 10 integriertes Spannband 641 aufweist;
- Fig. 9a-b: eine Rohrschelle 1F in einer sechsten vorzugsweisen Ausgestaltung mit einem zweiteiligen Montageelement 10; und
- Fig. 10a-b: Montageelemente 10 mit vorzugsweise ausgestalteten Arretierelementen 111 bzw. 1111.

Figur 1 zeigt die aus [1] bekannte Rohrschelle X1, die eingangs beschrieben ist.

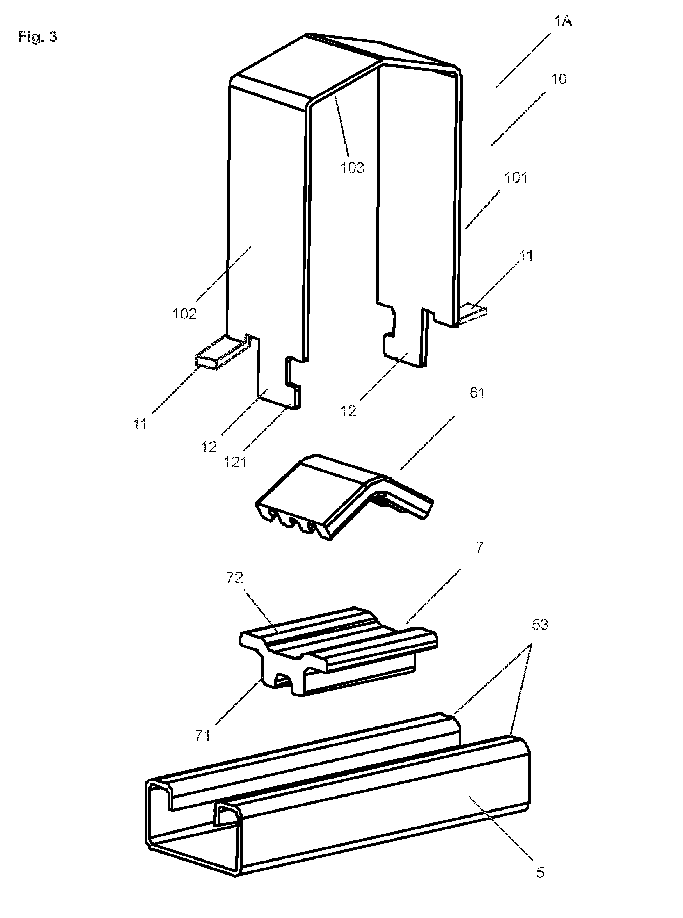

Figur 2 zeigt eine erfindungsgemässe Rohrschelle 1 mit einem flächig und zumindest annähernd in der Form eines U-Profils ausgestalteten Montageelement 10, welches in Figur 3 alleinstehend gezeigt ist. Das Montageelement 10 weist zwei zueinander parallele Schenkel 101, 102 auf, die durch ein Dachelement 103 miteinander verbunden und je mit einem Fusselement 12 versehen sind.

Die Fusselemente 12 sind in ein C-Profil-förmiges Profilelement 5 eingehängt, welches zwei durch ein Mittelstück 51 miteinander verbundene Seitenstücke 52 und daran angeformte Endstücke 53 aufweist. Die beiden nach innen abgewinkelten Endstücke 53 begrenzen einen der Aufnahme der Fusselemente 12 dienenden Kanal 55. Damit sich das Montageelement 10 nicht selbsttätig vom Profilelement 5 lösen kann ist am Montageelement 10 ein Arretierelement 11 angeformt, welches unmittelbar an den Rücken des Fusselements 12 anschliesst und in den freien Bereich des Kanals 55 hinein gedrückt werden kann, um die Fusselemente 12 zu fixieren.

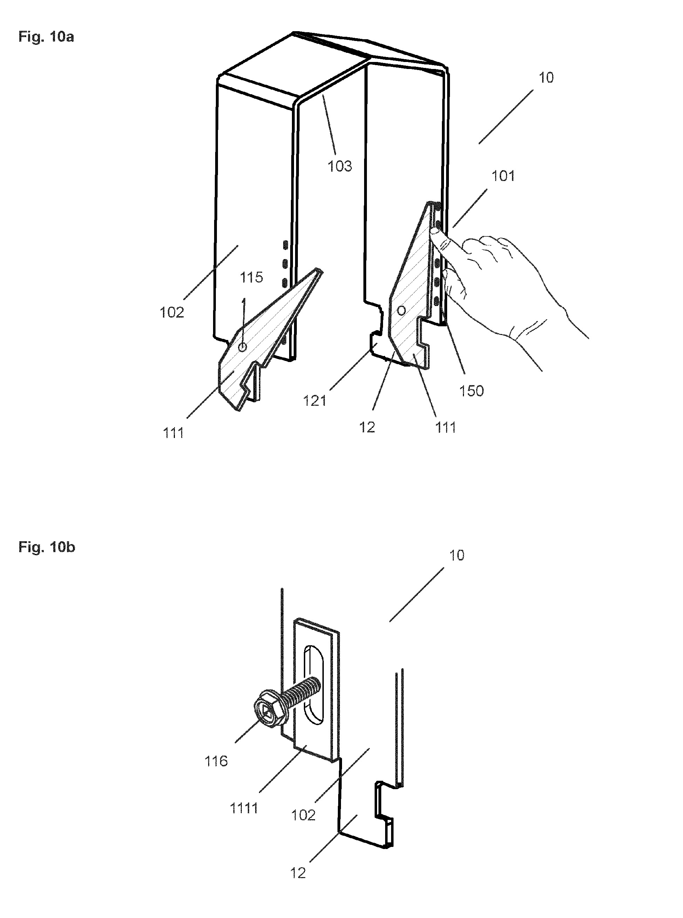

Das Montageelement 10 kann in einfacher Weise von einem Stahlband abgeschnitten und derart gebogen werden, dass die beiden Schenkel 101, 102 parallel zueinander ausgerichtet sind. Das Dachelement 103 ist etwa in der Mitte mit einer Biegung versehen. Die Arretierelemente 11 sind nach aussen gebogen, so dass sie nach der Installation der Rohrschelle 1 in den Kanal 55 eingedrückt bzw. eingedreht werden können, um das selbsttätige Lösen der Rohrschelle 1 zu verhindern. Beispielsweise werden die beiden Arretierelemente 11 mit einem Schraubendreher in den Kanal 55 hinein gestossen. Ebenso kann das Montageelement 10 vom Profilelement 5 wieder gelöst werden, indem die Arretierelemente 11 mittels eines Schraubendrehers wieder nach oben gebogen werden. Hingegen ist es nicht möglich, das Montageelement 10 ohne Werkzeug wieder zu lösen. Das Arretierelement 11 kann beispielsweise auch als Arretierschieber oder ein Arretierhebel vorgesehen sein, welcher manuell in den Kanal 55 hinein verschoben bzw. gedreht werden kann, um das Fusselement 12 zu arretieren (siehe die Figuren 10a und 10b) .

Die beiden Schenkel 101, 102 und/oder das Dachelement 103 sind vorzugsweise mit Montageelementen, wie Öffnungen und Flanschelementen, versehen, welche es erlauben, eine Spannvorrichtung 6 zu halten, mittels der ein installiertes Rohr 6 gegen das Profilelement 5 gedrückt werden kann.

Mit der erfindungsgemässen Rohrschelle 1 können verschiedene Spannvorrichtungen 6 eingesetzt werden, weshalb diese in Figur 2 mit einem schraffierten Pfeil symbolisiert sind.

Figur 3 zeigt die Einzelteile der Rohrschelle 1A von Figur 2 in einer ersten vorzugsweisen Ausgestaltung mit einer besonders einfach ausgestalteten Spannvorrichtung 61, die ein elastisches Element umfasst, welches unterhalb des Dachelements 103 des Montageelements 10 eingefügt wird und an dieses angepasst ist. Bei der Installation dieser Rohrschelle 1A wird das elastische Element 61 gegen das zu installierende Rohr 2 angedrückt und komprimiert. Das Rohr 2 wird gegen ein elastisches Lagerelement 7 angedrückt, welches ein in den Kanal 55 des Profilteils 5 eingeführtes Ankerelement 71 und einen die Endstücke 43 des Kanals 55 überlappenden Aufnahmekörper 72 aufweist, der ebenfalls komprimiert wird. In dieser Ausgestaltung der Rohrschelle 1A können Rohre 2 spielfrei gehalten werden, die in ihrem Durchmesser nicht stark variieren. D.h., die Rohrschelle 1A eines bestimmten Typs wird nur für Rohre 2 und Leitungen eingesetzt, welche ähnliche Dimensionen aufweisen.

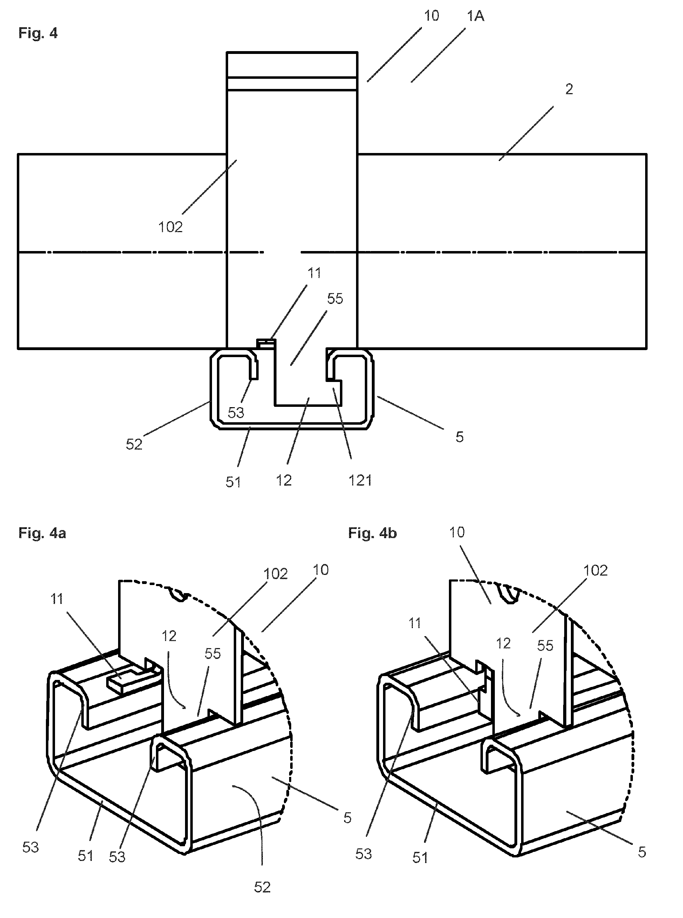

Figur 4 zeigt die installierte Rohrschelle 1A von Figur 3 mit den in das Profilelement 5 eingehängten Fusselementen 12 vor der Betätigung der Arretierelemente 11.

Figur 4a zeigt das in das Profilelement 5 eingehängte Fusselement 12 des zweiten Schenkels 102 von Figur 4 mit noch nicht aktiviertem Arretierelement 11. Das Arretierelement 11, welches einstückig mit dem Montageelement 10 verbunden ist, ist rechtwinklig zum Schenkel 102 nach aussen gebogen, weshalb der Raum im Rücken des Fusselements 12 frei ist und dieses aus dem Eingriff mit dem zugewandten Endstück 53 des Profilelements 5 gelöst werden kann.

Figur 4a zeigt das in das Profilelement 5 eingehängte Fusselement 12 des zweiten Schenkels 102 von Figur 4 mit aktiviertem Arretierelement 11. Dabei wurde das Arretierelement 11 beispielsweise mittels eines Schraubendrehers nach unten in den Kanal 55 hinein gestossen, so dass es in der Ebene des zweiten Schenkels 102 liegt und den Raum hinter dem Rücken des Fusselements 12 verschliesst und dieses in Position hält. Das Montageelement 10 bleibt somit zuverlässig mit dem Profilelement 5 verbunden und kann sich von diesem nicht selbsttätig lösen. Zum Lösen des Montageelements 10 wird das Arretierelement 11 mittels des Schraubendrehers wieder aus dem Kanal 55 entfernt. In der Folge kann das Fusselement 12 in den freien Bereich des Kanals 55 zurück verschoben und daraus gelöst werden.

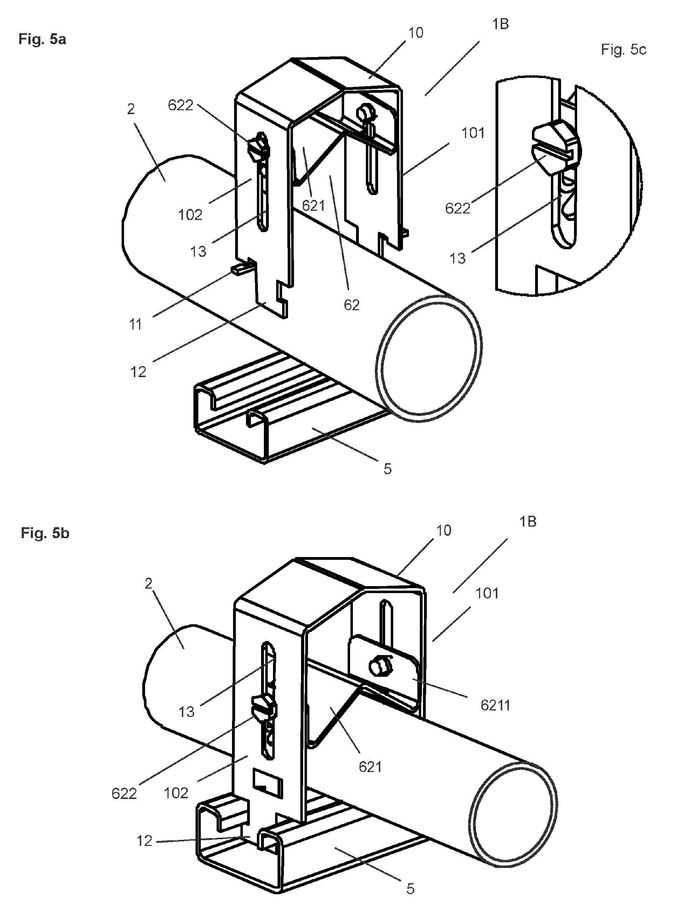

Figur 5a zeigt die Rohrschelle 1B in einer zweiten vorzugsweisen Ausgestaltung mit einer Spannvorrichtung 62, die einen mittels Befestigungsschrauben 622 mit den Schenkeln 101, 102 des Montageelements 10 verbundenen Bügel 621 aufweist.

Der Bügel 621 weist die Form eines nach unten geöffneten V sowie zwei Endstücke 6211 auf, die parallel zu den Schenkeln 101, 102 ausgerichtet und mit Gewindebohrungen versehen sind. Die mit den Endstücken 6211 verbundenen Befestigungsschrauben 622 sind durch Längsschlitze 13 hindurch geführt, die in den Schenkeln 101, 102 vorgesehen und parallel dazu ausgerichtet sind. Der Bügel 621 kann daher entlang den Schenkeln 101, 102 verschoben werden, um, wie in Figur 5b gezeigt, ein installiertes Rohr 2 zu fixieren. Die V-Form erlaubt es dem Bügel 621, Rohre 2 zu erfassen und zuverlässig zu halten, die unterschiedliche Durchmesser aufweisen.

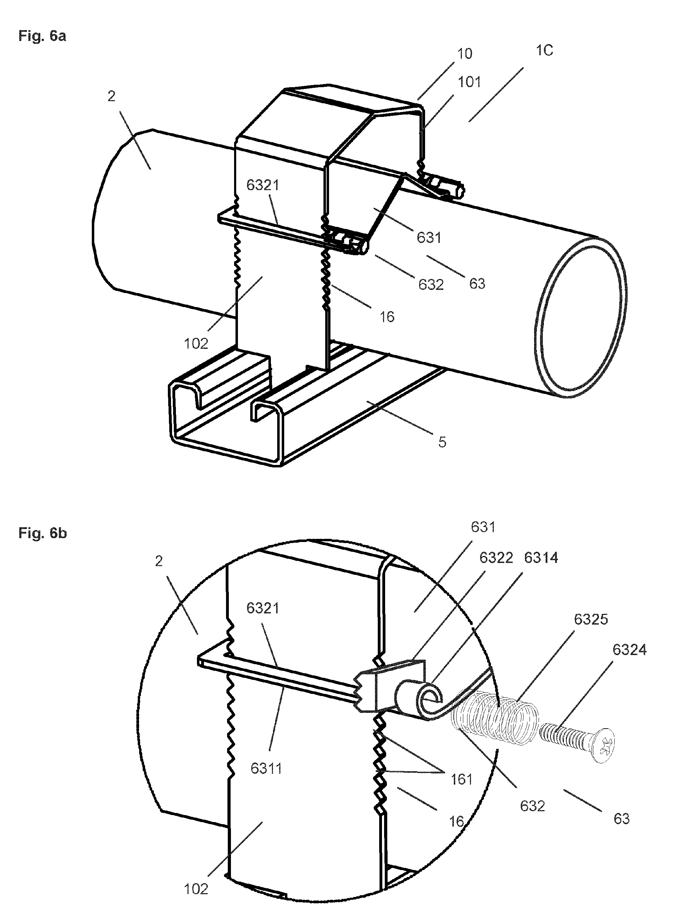

Figur 6a zeigt die Rohrschelle 1C in einer dritten vorzugsweisen Ausgestaltung mit einer in Figur 6b im Detail gezeigten Spannvorrichtung 63, die sich formschlüssig und somit mit erhöhter Sicherheit befestigen lässt.

Die Spannvorrichtung 63 weist einen beidseits mittels je einer Rastvorrichtung 632 mit den Schenkeln 101, 102 des Montageelements 10 verbundenen Bügel 631 auf. Der Bügel 631 umfasst Endstücke 6311 mit je einer Schlitzöffnung 6321, durch die der zugehörige Schenkel 101; 102 geführt ist. Jeder der Schenkel 101, 102 weist eine Rasterung 16 mit mehreren Rastpositionen 161 auf, in die ein vorzugsweise elastisches oder elastisch gelagertes Rastelement 6322 der Rastvorrichtung 632 einrasten kann. Die Rastvorrichtung 632 umfasst beispielsweise ein Federelement 6325, welches bei erhöhter Krafteinwirkung auf den Bügel 631 komprimiert und aus der Rasterung 16 verdrängt wird. Anstelle einer Spiralfeder kann auch vorteilhaft eine Blattfeder verwendet werden, die formschlüssig an die Rasterung angepasst ist. Zusätzlich oder alternativ kann eine Schraube 6324 vorgesehen werden, mittels der das Rastelement 6322 fixiert werden kann. Die Schraube 6324 wird vorzugsweise in ein gerolltes Endstück 6314 des Bügels 631 eingeschraubt. Das Federelement 6325 wird vorzugsweise zwischen dem gerollten Endstück 6314 und dem Rastelement 6322 eingesetzt welches in der Folge vom Federelement 6325 gegen die Rasterung 16 angedrückt wird. Die elastische Lagerung und die Fixierung der Rastelemente 6322 kann auf weitere Arten erfolgen.

Besonders vorteilhaft bei dieser Ausgestaltung ist, dass die Schraube 6324 von vorn, parallel zur Längsachse des installierten Rohres, betätigt werden kann. Somit können mehrere Rohrschellen 1 aneinander anliegend in ein Profilelement 5 eingesetzt werden und von vorne fixiert werden. Auf diese Weise gelingt es, Rohrschellen und somit Rohre und Leitungen in hoher Dichte zu installieren.

Die Rasterung 16 wird vorzugsweise derart ausgestaltet, dass der Bügel 631 nach unten verschoben werden kann und nur durch manuelles Lösen der elastisch gelagerten Elements 63221 wieder freigegeben wird. Vorzugsweise weist die Rasterung 16 eine asymmetrische Sägezahnform auf, welche es dem elastisch gelagerten Element 63221 erlaubt, schräg nach unten zu gleiten und unterhalb der vorzugsweise senkrecht zum Schenkel 101; 102 ausgerichteten Flanke eines Sägezahns einzurasten. Auch unter Krafteinwirkung auf den Bügel 631 kann sich dieser daher nicht aus dem Eingriff mit den betreffenden Sägezähnen lösen. Die Montage dieser vorzugsweise ausgestalteten Rohrschelle 1C ist daher besonders einfach und sicher. Das Montageelement 10 wird mit dem Profilelement 5 verbunden, wonach der Bügel 631 nach unten gegen das Rohr 2 geführt wird. Sofern eine Nachjustierung im Rahmen von Wartungsarbeiten erforderlich ist, so kann der Bügel 631 mit einem Handgriff soweit erforderlich nachgeführt werden.

Auch bei dieser Ausgestaltung, wie bei allen weiteren Ausgestaltungen der Rohrschelle 1, sind weitere elastische Elemente 61 und 7, wie sie in Figur 2 gezeigt sind, vorteilhaft einsetzbar, um eine schonende Geräusch und Wärme dämmende spielfreie Lagerung des installierten Rohres 2 zu gewährleisten.

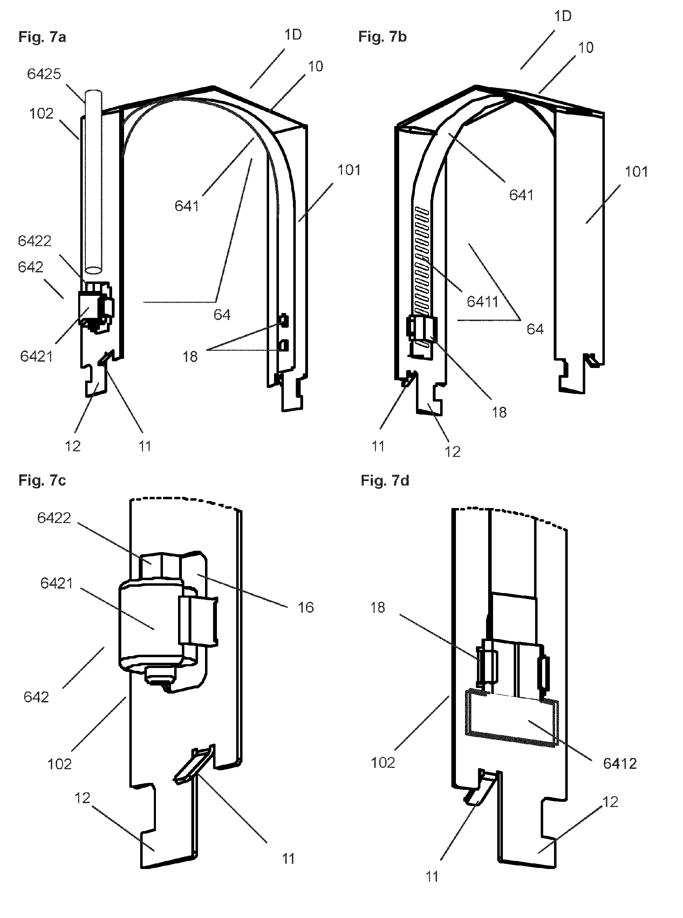

Die Figuren 7a-7f zeigen die Rohrschelle 1D in einer vierten vorzugsweisen Ausgestaltung mit einer Spannvorrichtung 64, die einen dem Ziehen eines Spannbandes 641 dienenden Schneckenantrieb 642 aufweist. Der Schneckenantrieb 642 erlaubt es, das Spannband 641 präzise zu positionieren. Nachfolgend wird das Spannband 641 vom Schneckenantrieb 642 auch unter Krafteinwirkung unverrückbar gehalten, ohne dass eine Verriegelung erforderlich wäre. Ein installiertes Rohr 2 bleibt damit spielfrei gehalten.

In den Figuren 7a und 7b ist gezeigt, dass das mit Traktionsöffnungen 6411 versehene Spannband 641 am ersten Schenkel 101 befestigt, beispielsweise verschweisst oder in Flanschelemente 18 eingehängt ist, wie dies in Figur 7d gezeigt ist.

Wie dies in Figur 7c gezeigt ist, ist der Schneckenantrieb 642 am zweiten Schenkel 102 in einer Fensteröffnung 16 derart gehalten, dass der Kopf der Schneckenschraube 6422 ausserhalb des Querschnitts des Montageelements 10 liegt und das Schneckengewinde 64221 der Schneckenschraube 6422 durch die Fensteröffnung 16 hindurch in die Traktionsöffnungen 6411 im Spannband 641 eingreifen kann. Damit die Schneckenschraube 6422 auch bei der Installation von Rohren und Leitungen mit hoher Dichte bequem bedient werden kann, ist diese vorzugsweise mit einem Verlängerungsstück 6425 gekoppelt.

Die Spannvorrichtung 64 kann daher mit wenigen Handgriffen in das entsprechend vorbereitete Montageelement 10 eingesetzt werden. Zu beachten ist, dass der Schneckenantrieb 642 mit dem Anziehen des Spannbandes 641 in den oberen Teil der Fensteröffnung 13 gezogen und dort fest verankert wird. Beispielsweise greifen die Ränder der Fensteröffnung 16 in Nuten 64211 ein, die im Schneckengehäuse 6421 eingeprägt sind, so dass das Schneckengehäuse 6421 verschiebbar gelagert ist. Hingegen kann das Schneckengehäuse 6421 auch durch weitere Flanschelemente gehalten werden oder mit dem zweiten Schenkel 102 verschweisst oder verschraubt werden.

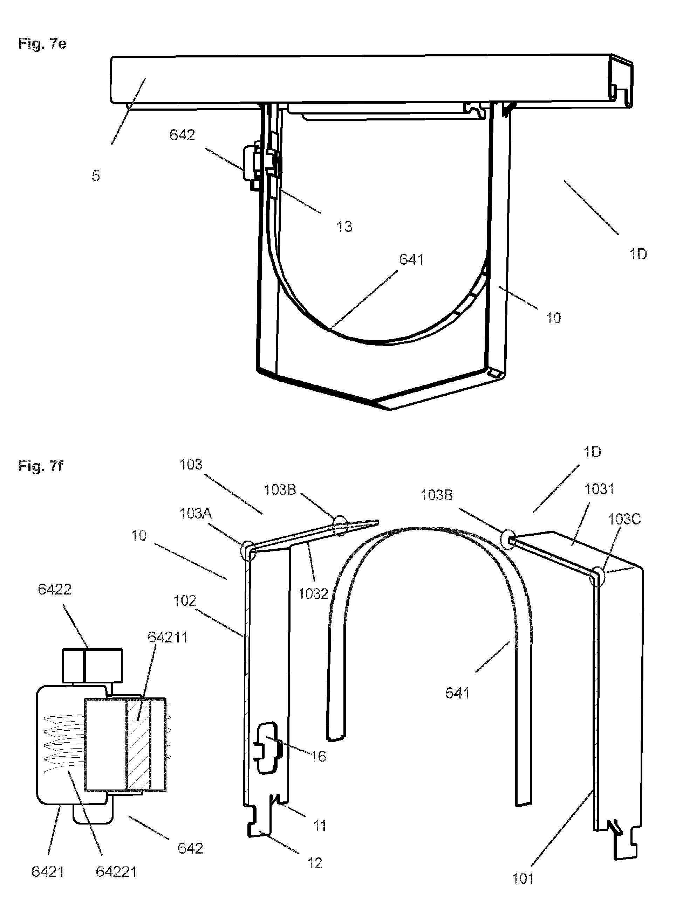

Figur 7e zeigt die installierte und mit einem Profilelement 5 verbundene Rohrschelle 1D in hängender Montage. Auch in dieser Lage kann die Rohrschelle 1D stehend montiert werden, wobei das installierte Rohr 2 in jeder Montageart stets sicher gehalten wird.

Figur 7f zeigt die Rohrschelle 1D mit einem zweiteiligen Montageelement 10, das ein Dachelement 103 umfasst, welches in zwei Teile 1031, 1032 unterteilt ist, die vorzugsweise über Gelenke 103A, 103C mit den zugehörigen Schenkeln 101, 102 und über ein gemeinsames Scharnier 103B miteinander verbunden sind. Auf diese Weise kann das Montageelement 10 gefaltet und an den exakten Durchmesser insbesondere von grossen Rohren besser angepasst werden.

In Figur 7f ist ferner ein Schneckenantrieb 642 gezeigt, der ein Gehäuse 6421 mit einer darin eingesetzten Schneckenschraube 6422 umfasst, die ein Schneckengewinde 64221 aufweist. Das Schneckengehäuse 6421 weist eine Montagenut 64211 auf, in die der Rand der Fensteröffnung 16 eingeführt werden kann.

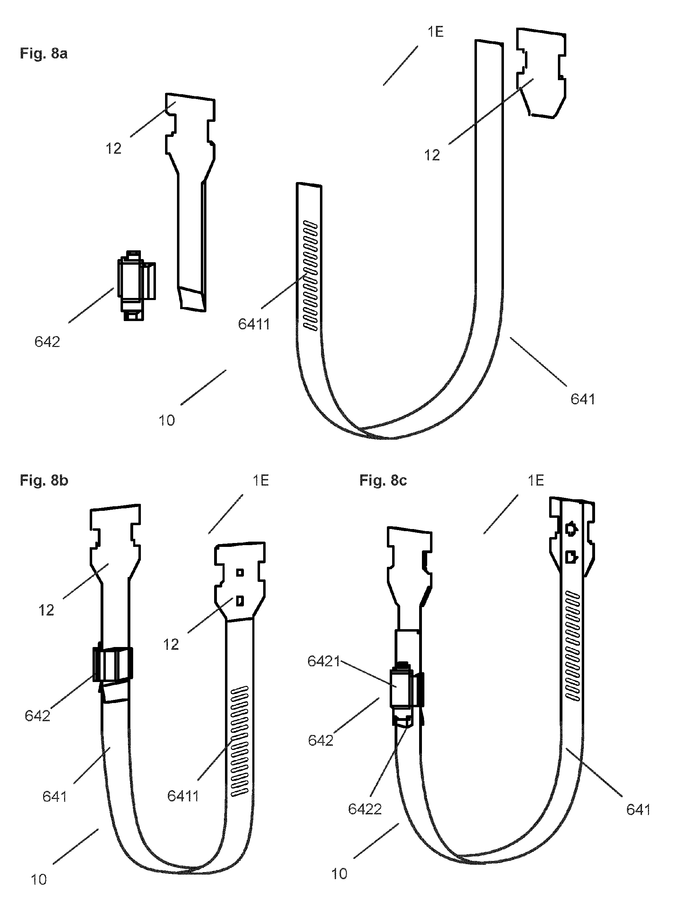

Die Figuren 8a-e zeigen die Rohrschelle 1E in einer fünften vorzugsweisen Ausgestaltung mit einer Spannvorrichtung 64, die einen Schneckenantrieb 642 und ein in das Montageelement 10 integriertes Spannband 641 aufweist. Das Montageelement 10 weist wiederum Fusselemente 12 auf, die in einem Profilelement 5 eingehängt werden können. Bei dieser Ausgestaltung lassen sich beide Fusselemente 12 drehen und in die Kanalöffnung 55 des Profilelements 5 einsetzen. Nach dem Anziehen des Spannbandes 641 sind die Fusselemente 12 senkrecht zum Profilelement 5 ausgerichtet und stabil mit dem Profilelement 5 verbunden. Der Schneckenantrieb 642 wird mit einem Teil des Montageelements 10 bzw. des Spannbandes 641 verbunden, wonach der andere Teil des Montageelements 10 bzw. des Spannbandes 641 in den Schneckenantrieb 642 eingeführt wird.

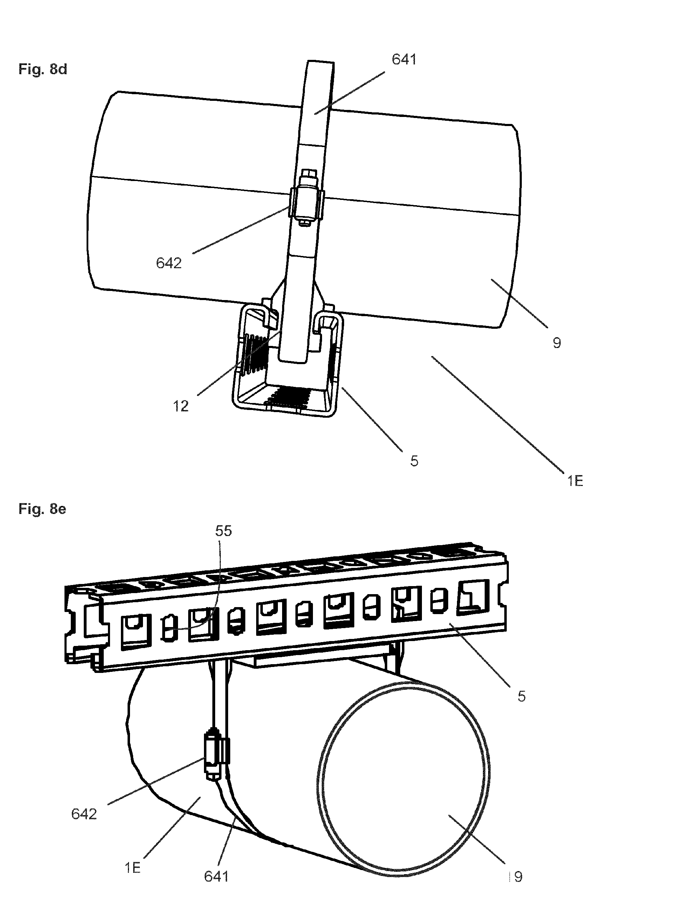

Figur 8a zeigt die Einzelteile der Rohrschelle 1E. Die Figuren 8b und 8c zeigen die zusammengesetzte Rohrschelle von der einen und der anderen Seite. Die Figuren 8d und 8e zeigen die Rohrschelle 1E nach der Installation auf einem Profilelement 5. Dabei ist ersichtlich, dass das Profilelement 5 das darin eingesetzte Fusselement 12 sicher hält.

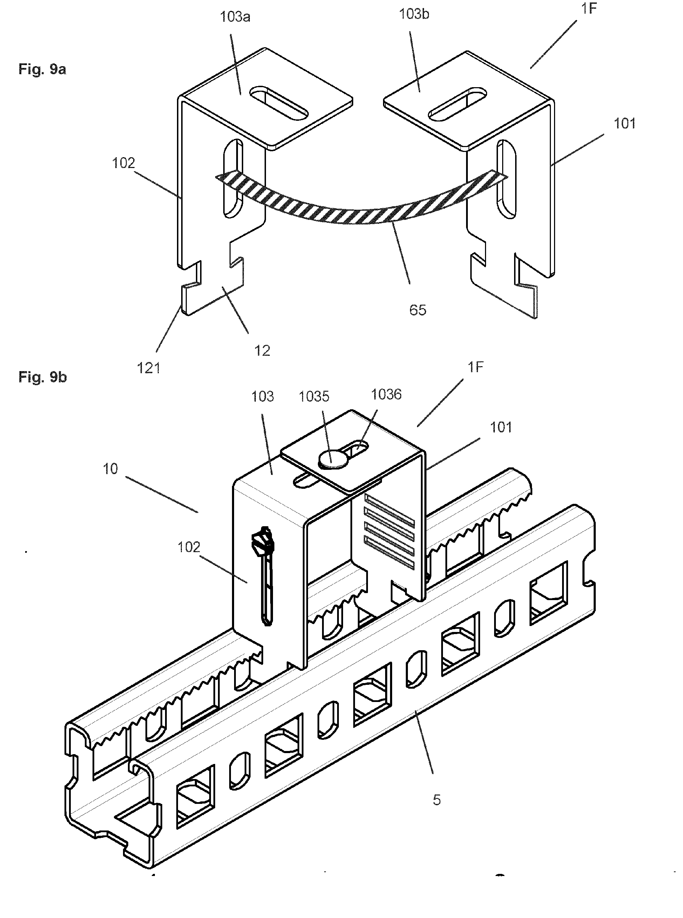

Figur 9a zeigt eine zweiteilige Rohrschelle 1F in einer weiteren vorzugsweisen Ausgestaltung. Das Montageelement 10 der Rohrschelle 1F besteht aus zwei vorzugsweise identischen Teilen, die je ein Fusselement 12 aufweisen. Die Fusselemente 12 weisen je zwei voneinander abgewandte Fussstücke 121 auf, welche vorzugsweise in der Form eines Ankers nach oben verlaufen. Auf diese Weise wird gewährleistet, dass sich das Fusselement 12 auch ohne Arretierelemente in einem Profilelement 5 sicher verankern lässt. Die beiden Teile des Montageelements 10 weisen je ein Dachstück 103a, 103b auf, die zusammen das Dachelement 103 bilden. Dazu weisen die Dachstücke 103a, 103b je eine Öffnung 1036 auf, durch die ein Verbindungselement 1035, beispielsweise eine mit einer Mutter verbundene Schraube oder eine Niete, hindurch geführt ist. Die beiden Teile des Montageelements können somit gegeneinander gedreht und problemlos in das Profilelement 5 eingehängt werden. Vorzugsweise werden Längsöffnungen 1036 vorgesehen, welche es erlauben, das Montageelement 10 an den Durchmesser des Rohres anzupassen. Der Bügel 65 kann auf verschiedene Arten mit dem Montageelement 10 verbunden werden. Beispielsweise wird ein elastischer Bügel 65 vorgesehen. Alternativ kann ein Bügel vorgesehen werden, der auf einer Seite des Montageelements 10 beispielsweise in Halteschlitze eingehängt und auf der anderen Seite verschraubt wird, wie dies in Figur 9b gezeigt ist.

Die Figuren 10a und 10b zeigen Montageelemente 10 mit vorzugsweise ausgestalteten Arretierelementen 111 bzw. 1111.

Figur 10a zeigt ein Montageelement 10 mit einseitig ausgerichteten Fusselementen 12, 121. Die Fusselemente 12 können in ein Profilelement eingehängt werden, wie es zum Beispiel in Figur 9b gezeigt ist. Zur Arretierung ist ein Arretierhebel 111 vorgesehen, welcher mittels einer Welle 115 drehbar gelagert ist. Der Arretierhebel 111 weist am unteren Ende ein Fussstück auf, welches vom Fussstück 121 des Fusselements 12 abgewandt ist. In der Arretierposition bilden die beiden Fussstücke innerhalb des Profilelements einen T-förmigen Anker. Durch eine Drehung kann das Fussstück des Arretierhebels 111 über das Fusselement 12 des Montage Bügels 10 gedreht werden, so dass das Fusselement 12 in das Profilelement entnommen oder in dieses eingesetzt werden kann. Der Arretierhebel 111 kann in der Arretierposition in auf verschiedene Arten fixiert werden. Beispielsweise wird der Arretierhebel 111 durch Ausformungen oder Flanschelemente 150 gehalten, die mit minimalem Aufwand am Montageelement vorgesehen werden können.

Figur 10b zeigt das Arretierelement in der Ausgestaltung eines Schiebers. Der Arretierschieber 1111 ist mit einer Längsöffnung vorgesehen, durch die eine Schraube 110 hindurch geführt ist. Nach dem Einhängen der Rohrschelle 1A kann die Schraube 110 gelöst und der Arretierschieber 1111 in das Profilelement 5 eingefahren werden. Der Arretierschieber 1111 kann auch durch Flanschelemente gehalten sein, die beispielsweise aus dem Montageelement 10 ausgeschnitten sind.

## Patentansprüche

1. Rohrschelle (1) für die Installation eines Rohres (2), mit einem Montageelement (10), welches dem Halten des Rohres (2) dient und mit einem Profilelement (5) verbindbar ist, **dadurch gekennzeichnet, dass** das Montageelement (10) flächig und zumindest annähernd in der Form eines U-Profils ausgestaltet ist und zwei Schenkel (101, 102) aufweist, die je mit einem Fusselement (12) versehen sind, welche in das Profilelement (5) eingehängt werden können und mit wenigstens einer Spannvorrichtung (6), mittels der das Rohr (2) gegen das Profilelement (5) anpressbar ist.

2. Rohrschelle (1) nach Anspruch 1, **dadurch gekennzeichnet, dass** die Fusselemente (12) in die gleiche Richtung oder in einander entgegengesetzte Richtungen weisen und dass für wenigstens eines der Fusselemente (12) ein Arretierelement (11; 111; 1111) vorgesehen ist, welches nach dem Einhängen des Fusselements (12) in den Bereich des Weges hinein bringbar ist, entlang dem das zugehörige Fusselement (12) in das Profilelement (5) eingeführt wurde.

3. Rohrschelle (1) nach Anspruch 2, **dadurch gekennzeichnet,**
a) **dass** das Arretierelement (11) am Montageelement (10) angeformt und vor der Montage der Rohrschelle (1) nach aussen gebogen ist; oder
b) **dass** das Arretierelement (111) als Schieber ausgestaltet ist, der mittels eines Verbindungselements (116) oder mittels Flanschelementen verschiebbar mit dem Montageteil (10) verbunden ist; oder
c) **dass** das Arretierelement (1111) ein drehbar gelagerter Hebel ist, der vorzugsweise ein Fusselement aufweist und arretierbar ist.

4. Rohrschelle (1) nach Anspruch 1, 2 oder 3, **dadurch gekennzeichnet, dass** das Profilelement (5) einen C-förmigen Querschnitt mit gegeneinander gerichteten Endstücken (53) aufweist, zwischen denen ein Kanal (55) geöffnet ist, durch den hindurch die Fusselemente (12) in das Profilteil (5) einführbar sind.

5. Rohrschelle (1) nach Anspruch 4, **dadurch gekennzeichnet, dass** ein elastisches Lagerelement (7) vorgesehen ist, welches ein in den Kanal (55) des Profilelements (5) einführbares Ankerelement (71) und einen die Endstücke (43) des Kanals (55) überlappenden Aufnahmekörper (72) aufweist.

6. Rohrschelle (1) nach einem der Ansprüche 1 - 5, **dadurch gekennzeichnet,**
a) **dass** die Spannvorrichtung (6, 61) ein zwischen das installierte Rohr (2) und das Montageelement (10) einsetzbares elastisches Element;
b) **dass** die Spannvorrichtung (6, 62) einen mittels Befestigungsschrauben (622) mit den Schenkeln (101, 102) des Montageelements (10) verbundenen Bügel (621);
c) **dass** die Spannvorrichtung (6, 63) einen mittels wenigstens einer Rastvorrichtung (632) mit den Schenkeln (101, 102) des Montageelements (10) verbundenen Bügel (631); oder
d) **dass** die Spannvorrichtung (6, 64) einen dem Ziehen eines Spannbandes (641) dienenden Schneckenantrieb (642)
umfasst.

7. Rohrschelle (1) nach Anspruch 6, **dadurch gekennzeichnet, dass** die Schenkel (101, 102) je eine parallel dazu verlaufende Schlitzöffnung (13) aufweisen, durch die hindurch die Befestigungsschrauben (622) zu je einer Gewindebohrung in Endstücken (6211) des Bügels (621) geführt sind, vorzugsweise parallel zu den Schenkeln (101, 102) ausgerichtet sind.

8. Rohrschelle (1) nach Anspruch 6, **dadurch gekennzeichnet, dass** die Schenkel (101, 102) des Montageelements (10) vorzugsweise je wenigstens eine Rasterung (16) mit mehreren Rastpositionen (161) aufweisen, in die ein vorzugsweise elastisch gelagertes Rastelement (6322) der an wenigstens einem Endstück (6311) des Bügels (631) vorgesehen Rastvorrichtung (632) einrasten kann, wobei vorzugsweise jedes Endstück (6311) eine Durchtrittsöffnung (6321) vorgesehen ist, durch die der zugeordnete Schenkel (101; 102) hindurch geführt ist.

9. Rohrschelle (1) nach Anspruch 6, **dadurch gekennzeichnet, dass** das mit Traktionsöffnungen (6411) versehene Spannband (641) des Spannelements (64) am ersten Schenkel (101) und dass der Schneckenantrieb (642) am zweiten Schenkel (102) befestigt ist und mit einem Schneckengewinde einer in einem Schneckengehäuse (6421) gelagerten Schneckenschraube (6422) in die Traktionsöffnungen (6411) eingreift.

10. Rohrschelle (1) nach Anspruch 9, **dadurch gekennzeichnet, dass** das Schneckengehäuse (6421) in einer im zweiten Schenkel (102) vorgesehenen Fensteröffnung (16) derart gehalten ist, dass der Kopf der Schneckenschraube (6422) ausserhalb des Querschnitts des Montageelements (10) liegt und das Schneckengewinde der Schneckenschraube (6422) durch die Fensteröffnung (16) hindurch in die Traktionsöffnungen (6411) im Spannband (641) eingreift.

11. Rohrschelle (1) nach Anspruch 9 oder 10, **dadurch gekennzeichnet, dass** das Endstück (6412) des Spannbandes (641) im Bereich des Fusselements (12) mit dem ersten Schenkel (101) verschweisst oder mittels Flanschelementen (18) gehalten ist.

12. Rohrschelle (1) nach Anspruch 6, **dadurch gekennzeichnet, dass** das Spannband (641) in das Montageelement (10) integriert ist und einen Teil davon bildet.

13. Rohrschelle (1) nach einem der Ansprüche 9 - 12, **dadurch gekennzeichnet, dass** das Montageelement (10) aus zwei Teilen besteht, die miteinander koppelbar sind.
